Europäisches Patentamt

(19) European Patent Office

Office européen des brevets

(11) EP 0 456 756 B1

## (12) EUROPEAN PATENT SPECIFICATION

(45) Date of publication and mention
of the grant of the patent:
**12.06.1996 Bulletin 1996/24**

(21) Application number: **90903530.5**

(22) Date of filing: **31.01.1990**

(51) Int. Cl.⁶: **A01N 25/28**, A01N 25/04
// (A01N25/28, 25:32, 25:30,
47:18, 47:12, 43:70, 39:02,
37:18, 33:18)

(86) International application number:
**PCT/US90/00541**

(87) International publication number:
**WO 90/08468 (09.08.1990 Gazette 1990/19)**

(54) **SINGLE-PACKAGE AGRICULTURAL FORMULATIONS COMBINING IMMEDIATE AND TIME-DELAYED DELIVERY**

EINZELPACKUNG LANDWIRTSCHAFTLICHER FORMULIERUNGEN MIT SOFORTIGER UND
VERZÖGERTER VERABREICHUNG

COMPOSITIONS AGRICOLES A UN SEUL EMBALLAGE A LIBERATION IMMEDIATE ET
ENTRETENUE

(84) Designated Contracting States:
AT BE CH DE DK ES FR GB IT LI LU NL SE

(30) Priority: **03.02.1989 US 291723**

(43) Date of publication of application:
**21.11.1991 Bulletin 1991/47**

(73) Proprietor: **ZENECA INC.**
**Wilmington, Delaware 19897 (US)**

(72) Inventors:
• **SCHER, Herbert, B.**
**Moraga, CA 94556 (US)**
• **RODSON, Marius**
**El Cerrito, CA 94530 (US)**
• **CALVO, Jose, Luis**
**Berkshire RG11 4HZ (GB)**

• **GIMENO, Miguel**
**A-1180 Wienerkshire (AT)**

(74) Representative: **Ricks, Michael James et al**
**Intellectual Property Department**
**ZENECA Agrochemicals**
**Jealotts Hill Research Station**
**P.O. Box 3538**
**Bracknell Berkshire RG12 6YA (GB)**

(56) References cited:
EP-A- 0 008 207        EP-A- 0 017 409
EP-A- 0 238 184        EP-A- 0 252 897
DE-A- 1 960 430        DE-A- 2 017 356
DE-A- 2 017 808        DE-A- 2 052 428
DE-A- 2 207 440

EP 0 456 756 B1

**Description**

BACKGROUND OF THE INVENTION

This invention relates to formulations of biologically active agents suitable for agricultural field application.

Agricultural chemicals, particularly herbicides, are sold in a wide variety of formulations, including solid formulations such as powders, dusts, granules and time-release microcapsules, liquid formulations such as solutions and emulsions, and suspensions of solids in liquid carriers. The choice of the formulation is generally governed by such considerations as the physical characteristics of the active ingredient, the type of crop or weed species to which the formulation is to be applied and its growth cycle, and the timing of the application (postemergence or preemergence).

Delayed-release formulations are favored for their ability to provide herbicidal efficacy over an extended period of time. Initial activity is often low, however, while the concentration of active ingredient in the soil slowly rises to an effective level. In many cases, delayed-release formulations must be supplemented with a formulation providing immediate delivery of the same active ingredient to both avoid the initial weed growth and provide continuous control over the crop's growth cycle. The conventional solution is a two-package formulation in which the delayed-release and immediate delivery formulations are kept apart until field application.

In many cases, two different active ingredients are needed at the same time for effective weed control. The combination of two active ingredients in a single formulation, however, is not readily achieved in many cases. Difficulties such as chemical or physical incompatibility of the active species, and the need for special formulating techniques for certain species due to low melting points or other characteristics frequently make it impractical or unfeasible to combine the two species in a single-package formulation.

Adding further to these difficulties is the need to maintain the physical stability of the formulation during storage. This is often critical to its effectiveness when finally applied to a field for crop protection. This is of particular concern with regard to multi-phase systems such as suspensions and emulsions. Immediate delivery systems such as emulsions, emulsifiable concentrates and suspensions of solid particles can undergo transformations such as changes in phase, particle settling and particle or droplet agglomeration. Such transformations are often detrimental to the dispersibility of the active ingredient in the field, and sometimes even to the ability of the formulation to deliver the active ingredient to the soil or plant surface to which the formulation is applied. Furthermore, such transformations are difficult if not impossible to reverse.

In the case of water-suspended time-release microcapsules, it is essential that the active ingredient remain in the microcapsule until field application. Since the encapsulated phase is generally a solution of the active ingredient in a non-water-miscible solvent, the surrounding water serves as a barrier preventing rapid outward diffusion of the active ingredient. When the solvent is a volatile solvent, the water also series to prevent evaporation of the solvent and any solidification of the active ingredient which might occur as a result.

The placement of an additional dispersed phase, whether solid or liquid, in the water presents a risk of upsetting the stability of a multi-phase formulation. Adding solid particles or suspended droplets to a microcapsule suspension should be particularly hazardous to the suspension stability of the entire system, since the surface of the microcapsule is chemically distinct from that of the added material. The microcapsule generally has a micro-porous polymer shell whose surface charges and accessible functional groups will differ considerably from those of the active ingredient which is present on the droplet or particle surface. The introduction of the droplet or particle may thus upset the balance of surface forces set up by the suspension agents normally used for the microcapsules and interfere with their effectiveness.

In addition to maintaining the microcapsule dispersion, the system must hold the added phase in a dispersed state as well, and also maintain the water barrier around the microcapsules. Thus, each dispersed phase must be prevented from agglomerating with itself as well as with the other dispersed phase. In view of the surface differences between the two dispersed phases, it is not likely that a single suspension system would be readily found which would serve all these functions.

When the material added to the microcapsule suspension are droplets forming an emulsion, it is often critical that the active ingredient in the emulsion not crystallize during storage. For active ingredients with low water solubility, crystallization is avoided by careful maintenance of the equilibrium distribution of the active between the droplets and the water, and control of the diffusion of the active across the phase boundary, which involves careful control of the proportion of solvent to active ingredient in the droplets. The introduction of active ingredient to the continuous phase from a second source (i.e., diffusing out of the microcapsule) runs the risk of causing active ingredient to crystallize out of the continuous phase due to an abnormally high concentration.

SUMMARY OF THE INVENTION

It has now been discovered that microcapsule formulations can indeed be combined with emulsions or particle dispersions in a single-package formulation which is storage-stable and hence provides substantially the full biocidal efficacy of each of the two forms as if they were applied individually. The single-package formulation is thus a suspension

2

having two dispersed phases -- the first being a biologically active agent encapsulated in a shell of inert polymeric diffusion-limiting material (i.e., a microcapsule) providing a time-delayed gradual release of the agent through the shell walls, and the second being a biologically active agent in water-insoluble form with no diffusion-limiting barrier at its surface -- together with an appropriate suspension system to prevent the dispersed phases from agglomerating within themselves and with each other. The second dispersed phase may be either droplets of a water-immiscible active ingredient or solution, or solid active ingredient particles. The invention is useful in combining two different active ingredients as well as in combining immediate-delivery and delayed-delivery forms of the same ingredient. The invention is also useful in combining a biocide with an activity modifier such as a safener, with the effect of lowering the needed amount of one or the other by removing it to a separate phase. In certain cases, a unique combination of surface-active agents has also been discovered which maintains the phases in suspension.

The invention is of particular utility in herbicide formulations, notably with herbicides such as thiocarbamates, triazines, amides and dinitroanilines. Further embodiments, objects and advantages of the invention will be apparent from the description which follows.

## DETAILED DESCRIPTION OF THE INVENTION AND PREFERRED EMBODIMENTS

The present invention is applicable to microcapsule structures in general, and extends to the wide range of microcapsule technology described in the patent literature and in commercial use. Descriptions of various types of microcapsules and various methods for forming microcapsules may be found, for example, in Vandegaer, U.S. Patent No. 3,577,515 (May 4, 1971); Scher, U.S. Patent No. 4,046,741 (Sept. 6, 1977); Scher, U.S. Patent No. 4,140,516 (Feb. 20, 1979); Scher, U.S. Patent No. 4,285,720 (Aug. 21, 1981); and Scher, U.S. Patent No. 4,643,764 (Feb. 17, 1987). Microcapsules formed by interfacial polycondensation are preferred, with sizes preferably ranging from about 1 μm to about 100 μm in diameter. Such microcapsules have porous shells of inert polymeric material which maintains its integrity during storage and application, and delivers the active ingredient by slow diffusion from the capsule interior through the shell to the locus of application. Preferred polymers are polyureas.

The contents of the microcapsule are generally liquid, and are comprised of either a liquid active ingredient (or combination of active ingredients) which is non-water-miscible, or an active ingredient dissolved in a water-immiscible solvent. The art extends to a wide range of such solvents, examples of which are aromatics such as xylene and benzene, aliphatics such as pentane and hexane, and others such as carbon disulfide and carbon tetrachloride.

The free active ingredient, i.e., the ingredient included outside the microcapsules and intended for immediate release to the locus of application, may be either solid particles or water-immiscible liquid droplets suspended in the aqueous phase together with the microcapsules.

When solid particles are used, they may be equivalent in size and composition to such known formulations as wettable powders or presuspended solids. They are generally finely divided particles in which the solid active ingredient is either the entire particle or is retained in a solid matrix, either by retention inside the pores thereof or as a coating on the surface. Examples of solid matrices suitable for this purpose include filler's earth, kaolin clays, attapulgite clays, silicas and other organic or inorganic water-immiscible solids. The content of active ingredient retained in these matrices may range from 5% to 95%. The size of these particles may vary widely, but will generally fall within the range of 0.5 microns to 100 microns. Generally, any ratio of the ingredients will work. In preferred embodiments for such systems, the microcapsules will comprise from 5% to 50% of the formulation, and the particles will comprise from 5% to 50%, all by weight.

When water-immiscible droplets are used, they may be equivalent in size and composition to emulsions typically used in field application. They may consist either of the active ingredient itself, provided it is a water-immiscible liquid at storage and application temperatures, or the active ingredient dissolved in a water-immiscible solvent. The art extends to many such solvents, for example xylene, heavy aromatic naphthas, and isophorone. The concentration of active ingredient in such a solution may range from 0.5% to 95% by weight. The droplets are formed by high shear agitiation and maintained by the suspension system as a whole. While the actual droplet size may vary widely, it will generally lie within the range of 0.5 μm to 100 μm. In preferred embodiments for such systems, the microcapsules will comprise from 5% to 50% of the formulation, and the droplets will comprise from 5% to 50%, all by weight.

The suspension system will generally be a combination of agents such as surfactants, clays, polymers and other suspension stabilizing materials appropriately selected to keep both the microcapsules and the free active ingredient phase in suspension and to avoid agglomeration among each dispersed phase as well as between the two dispersed phases. A wide range of such agents may be used, and the optimum combination for each particular system of active ingredients will vary. For thiocarbamate herbicides, the preferred suspension systems will contain a xanthan gum, an attapulgite clay, and sodium tripolyphosphate.

Thus according to the present invention there is provided a water-based herbicidal formulation comprising a continuous aqueous liquid having suspended therein:
a first dispersed phase comprised of S-ethyl cyclohexylethylthiocarbamate in liquid form encapsulated in a porous shell of inert polymeric diffusion-limiting material; and a second dispersed phase comprised of S-ethyl cyclohexylethylthiocarbamate with no diffusion-limiting barrier at the surface thereof;
and a suspension system to prevent the dispersed phases from agglomerating within themselves and with each other in which said suspension system is comprised of a combination of a xanthan gum, an attapulgite clay, aluminium sulfate, and sodium tripolyphosphate.

According to a further aspect of the present invention there is provided a water-based herbicidal formulation comprising a continuous aqueous liquid having suspended therein:
a first dispersed phase comprised of S-ethyl di-n-propylthiocarbamate in liquid form encapsulated in a porous shell of inert polymeric diffusion-limiting material; a second dispersed phase comprised of S-ethyl di-n-propylthiocarbamate with no diffusion-limiting barrier at the surface thereof; and a suspension system to prevent the dispersed phases from agglomerating within themselves and with each other wherein the suspension system is comprised of a combination of a xanthan gum, an attapulgite clay, and sodium tripolyphosphate.

According to a still further aspect of the present invention there is provided a water-based herbicidal formulation comprising a continuous aqueous liquid having suspended therein:
a first dispersed phase comprised of S-ethyl diisobutylthiocarbamate and N,N-diallyl-1,1-dichloroacetamide in liquid form encapsulated in a porous shell of inert polymeric diffusion-limiting material; and a second dispersed phase comprised of solid particles of 2-chloro-4-ethylamino-6-isopropylamino-S-triazine with no diffusion-limiting barrier at the surface thereof; and a suspension system to prevent the dispersed phases from agglomerating within themselves and with each other wherein said suspension system is comprised of a combination of a xanthan gum, aluminium sulfate, and sodium tripolyphosphate.

Thus for systems in which the active ingredient in both the microcapsules and the free dispersed phase is a combination of S-ethyl cyclohexylethylthiocarbamate and the safener N,N-diallyl-1,1-dichloroacetamide, the suspension system is the combination of a xanthan gum, preferably at 0.01%, weight, an attapulgite clay, preferbly at 0.1% to 1.0%, aluminum sulfate, preferably at 0.01% to 0.1%, and sodium tripolyphosphate, preferably at 0.003% to 0.1%, all by weight. For systems in which the active ingredient in both the microcapsules and the free dispersed phase is a combination of S-ethyl di-n-propylthio-carbamate and the safener N,N-diallyl-1,1-dichloroacetamide, the suspension system is the combination of a xanthan gum, preferably at 0.01% to 0.1%, weight, an attapulgite clay, preferably at 0.1% to 1.0%, and sodium tripolyphosphate, preferably at 0.01% to 0.1%, all by weight. For systems in which the microencapsulated ingredient is a combination of S-ethyl diisobutylthiocarbamate and the safener N,N-diallyl-1,1-dichloroacetamide, and the free active ingredient is solid particles of 2-chloro-4-ethylamino-6-isopropylamino-S-triazine, a favoured suspension system is the combination of a xanthan gum, preferably at 0.01% to 0.1%, aluminum sulfate, preferably at 0.01% to 0.1%, and sodium tripolyphosphate, preferably at 0.1% to 0.1%, all by weight.

According to a still further aspect of the present invention there is provided a water-based herbicidal formulation comprising a continuous aqueous liquid having suspended therein:
a first dispersed phase comprised of $\alpha,\alpha,\alpha$-trifluoro-2,6-dinitro-N,N--dipropyl-p-toluidine in liquid form encapsulated in a porous shell of inert polymeric diffusion-limiting material; and a second dispersed phase comprised of solid particles of 2-($\alpha$-naphthoxy)-N,N-diethylpro-pionamide with no diffusion-limiting barrier at the surface thereof; and a suspension system to prevent the dispersed phases from agglomerating within themselves and with each other wherein said suspension system is comprised of a combination of a polyalkylene glycol ether, an ethoxylated alkylaryl ether, an ethoxylated polyarylphenol phosphate, a cresol formaldehyde, a xanthan gum and an attapulgite clay.

The formulations will frequently include additional adjuvants, mostly in very small amounts in proportion to the active ingredients, to serve a variety of functions, mostly associated with the individual active ingredients. These adjuvants may include emulsifiers for those systems in which the free active ingredient forms an emulsion, freezing point depressants, wetting agents, pH modifiers, and the bio-cidal species included to protect some of the other species in the formulation ffrom organisms present in the water during storage. Examples of emulsifiers are anionic and nonionic species, and blends of both types. A typical blend is a combination of nonylphenol ethoxylates and calcium dodecyl benzene sulfonate. An example of a wetting agent is a dialkyl napthalene sulfonate. An example of a pH modifier is sodium carbonate. An example of a biocidal species is sorbic acid. Other adjuvants will be readily apparent to those skilled in the art.

The formulations of the present invention are prepared according to conventional techniques. In general, the prepared microcapsules in the form of an aqueous dispersion is combined with the other ingredients, including water, and blended under medium to high shear. High shear is particularly preferred when the free active ingredient is in a non-water-miscble liquid phase.

The formulations of the present invention may be applied to the field in any conventional manner. The formulations are aqueous suspensions, but will frequently be further diluted with water before they are applied to the field. The appropriate dilutions as well as the appropriate timing and method of application in each case will be readily apparent to those skilled in the art.

The following examples are offered strictly for illustration and are intended neither to define nor to limit the invention in any manner.

EXAMPLE 1

A formulation of the herbicide Ro-Neet (cycloate) with the safener R-25788, combining suspended microcapsules and an emulsion, was prepared using the following ingredients:

| | parts by weight |
|---|---|
| S-ethyl cyclohexylethylthiocarbamate (99.3%) | 160.02 |
| N,N-diallyl-2,2-dichloroacetamide (95%) | 13.94 |
| Sponto 221 -- blend of nonylphenol ethoxylates and calcium dodecyl benzene sulfonate, supplied by Witco Chemical Corp., Houston, Texas | 7.57 |
| water | 157.92 |
| Kelzan -- xanthan gum, supplied by Kelco, San Diego, California | 0.23 |
| sorbic acid | 0.40 |
| sodium tripolyphosphate | 0.12 |
| Attagel 40 -- an attapulgite clay, supplied by Engelhard Minerals and Chemicals, Menlo Park, New Jersey | 1.90 |
| aluminum sulfate (27.5% aqueous solution) | 0.23 |
| ethylene glycol | 40.43 |
| flowable microcapsule formulation containing 41.1% S-ethyl cyclohexylethylthiocarbamate and 3.4% N,N-diallyl-2,2-dichloroacetamide (by weight) in polyurea microcapsules of 14.3 $\mu$ (average) diameter, the microcapsule wall constituting 4.1% by weight of the formulation | 382.73 |
| Total | 765.49 |

The formulation was prepared by combining the Kelzan, sorbic acid, sodium tripolyphosphate and water with high shear stirring for fifteen minutes. The aluminum sulfate solution and ethylene glycol were then added. After stirring for a few minutes, the microcapsule flowable formulation was added. After five additional minutes of stirring, the S-ethyl cyclohexylethylthiocarbamate, N,N-diallyl-2,2-dichloroacetamide, and the Sponto 221 were combined and added. Stirring was continued for an additional five minutes and pH was adjusted to 11.0 with 50% aqueous caustic. The resulting formulation was a stable suspension of the microcapsules and discrete droplets, both containing the herbicide and safener, the droplets being approximately 5-20 $\mu$m in diameter, with no noticeable agglomeration.

EXAMPLE 2

A formulation of the herbicide Eradicane (EPTC plus the safener R-25788), combining suspended microcapsules and an emulsion, was prepared using the following ingredients:

|  | parts by weight |
|---|---|
| S-ethyl dipropylthiocarbamate (98.5% purity) | 347.53 |
| N,N-diallyl-2,2-dichloroacetamide (95%) | 28.96 |
| Sponto 221 ER -- blend of nonylphenol ethoxylates and calcium dodecyl benzene sulfonate, supplied by Witco Chemical Corp., Houston, Texas | 7.53 |
| water | 287.30 |
| Kelzan | 0.40 |
| sorbic acid | 1.36 |
| Attagel 40 | 5.1 |
| sodium tripolyphosphate | 0.41 |
| flowable microcapsule formulation containing 37.1% S-ethyl dipropylthiocarbamate, 3.1% N,N-diallyl-2,2-dichloroacetamide and 10.5% xylene (by weight) in polyurea microcapsules of 16 μ (average) diameter, the microcapsule wall constituting 4.1% by weight of the formulation | 678.60 |
| Total | 1357.19 |

The formulation was prepared by combining the Kelzan, sorbic acid, Attagel 40, sodium tripolyphosphate and water with high-shear stirring for fifteen minutes. The S-ethyl dipropylthiocarbamate, N,N-diallyl-2,2-dichloroacetamide and Sponto 221 ER were then combined and added to the stirring mixture. After five minutes of additional stirring, the microcapsule flowable formulation was added. Stirring was continued for an additional five minutes and the pH was adjusted to 11.0 with 50% aqueous caustic. The resulting formulation was a stable suspension of the microcapsules and discrete droplets, both containing the herbicide and safener, the droplets being approximately 5-20 μm in diameter, with no noticeable agglomeration.

EXAMPLE 3

A formulation combining the herbicides Sutan[+] (butylate plus the safener R-25788) and atrazine, the former as suspended microcapsules and the latter as suspended solid particles, was prepared using the following ingredients:

|  | parts by weight |
|---|---|
| flowable microcapsule formulation containing 48.0% S-ethyl diisobutylthiocarbamate and 2.0% N,N-diallyl-2,2-dichloroacetamide (by weight) in polyurea microcapsules of 10.5 μm (average) diameter microcapsules, the microcapsule wall constituting 4.1% by weight of the formulation | 150.0 |
| 2-chloro-4-ethylamino-6-isopropylamino-S-triazine, an air-milled powder of 1-10 μ particle diameter, 95% active ingredient | 19.3 |
| Petro BAF -- dialkyl naphthalene sulfonate, supplied by Petrochemical Company, Inc., Fort Worth, Texas | 2.5 |
| sorbic acid | 0.21 |
| Kelzan | 0.13 |
| sodium tripolyphosphate | 0.06 |
| sodium carbonate | 1.12 |
| aluminum sulfate (27.5% aqueous solution) | 0.11 |
| Total | 209.43 |

The Petro BAF was dissolved in the water, and the 2-chloro-4-ethylamino-6-isopropylamino-S-triazine was stirred in to form a slurry. The microcapsule flowable was then added and the combination was stirred for twenty minutes with a medium-shear stirrer. The Kelzan, sodium tripolyphosphate, sorbic acid and sodium carbonate were then added and stirring was continued for an additional twenty minutes. The pH was then adjusted to 11.0 with 50% aqueous caustic. The resulting formulation was a stable suspension of the microcapsules and the atrazine particles, with no noticeable agglomeration.

EXAMPLE 4

This is a further illustration of the preparation of a formulation containing Sutan* microcapsules and atrazine particles in an aqueous suspension. The ingredients were as follows:

|  | parts by weight |
|---|---|
| flowable microcapsule formulation containing 48.0% S-ethyl diisobutylthiocarbamate and 2.0% N,N-diallyl-2,2-dichloroacetamide (by weight) in polyurea microcapsules of 11.5 $\mu$ (average) diameter, the microcapsule wall constituting 4.1% of the formulation | 3000.0 |
| Petro BAF | 100.0 |
| water | 520.0 |
| 2-chloro-4-ethylamino-6-isopropylamino-S-triazine, an air-milled powder of 1-10 $\mu$ particle diameter, 95% active ingredient | 386.0 |
| Kelzan | 2.0 |
| Attagel 40 | 7.0 |
| sorbic acid | 3.4 |
| sodium carbonate | 18.4 |
| aluminum sulfate (27.5% aqueous solution) | 2.0 |
| Total | $\overline{4038.8}$ |

All ingredients except the sodium carbonate and the aluminum sulfate were combined and stirred for fifteen minutes with a 2-inch Cowles disperser at 3000 rpm. The pH was then raised to 9.0 with 50% aqueous caustic, and the sodium carbonate and aluminum sulfate were added. Stirring was continued for an additional fifteen minutes, and the pH was raised to 11.0. The resulting formulation was a stable suspension of the microcapsules and the atrazine particles, with no noticeable agglomeration.

EXAMPLE 5

This example illustrates the combination of Devrinol (napropamide, or 2-($\alpha$-naphthoxy)-N,N-diethylpropionamide) and Treflan (trifluralin, or $\alpha,\alpha,\alpha$-trifluoro-2,6-dinitro-N,N-dipropyl-p-toluidine), using a particle suspension and a microcapsule suspension.

A Devrinol suspension concentrate was prepared by combining the following ingredients:

| | | parts by weight |
|---|---|---:|
| technical 2-($\alpha$-naphthoxy)-N,N-diethyl propionamide | | 45.0 |
| blend of polyalkylene glycol ether with ethoxylated alkylaryl ether | | 0.5 |
| mixture of water, ethylene glycol and propylene glycol (17.5:3:1) | | 43.5 |
| ethoxylated polyarylphenol phosphate (surfactant) | | 4.0 |
| cresol formaldehyde dispersant | | 1.0 |
| | Total | 94.0 |

Small amounts of a silicone defoamer were added during stirring to control foam formation. The mixture was cooled to about 5°C and milled in a refrigerated bead mill to a particle size of about 5 $\mu$ average. A small amount of xanthan gum was then added to prevent sedimentation during a two-year shelf life. Make-up water was added to adjust the active ingredient loading to 450 grams per liter.

A trifluralin microcapsule suspension was prepared with the following contents:

| | | parts by weight |
|---|---|---:|
| $\alpha,\alpha,\alpha$-trifluoro-2,6-dinitro-N,N-dipropyl-p-toluidine | | 35.5 |
| SURE SOL 190 (heavy aromatic solvent naphtha, supplied by Koch Chemical Co.) | | 12.5 |
| polyurea capsule wall | | 4.0 |
| water and other inerts | | balance |
| | Total | 100.0 |

The Devrinol suspension concentrate (39.8 parts by weight) was combined with the trifluralin capsule suspension (59.7 parts by weight), and the two were blended together using a low shear stirrer. Xanthan gum (0.05%) and Attagel 40 (0.5%) were added to obtain a structure that will prevent sedimentation of the solids and capsules. The resulting formulation was a stable suspension of the microcapsules and the Devrinol particles, with no noticeable agglomeration.

The foregoing is offered primarily for purposes of illustration. It will be readily apparent to those skilled in the art that substitutions and variations in the materials, proportions and procedures disclosed herein may be made without departing from the spirit and scope of the invention.

## Claims

1. A water-based herbicidal formulation comprising a continuous aqueous liquid having suspended therein:
   a first dispersed phase comprised of S-ethyl cyclohexylethylthiocarbamate
   in liquid form encapsulated in a porous shell of inert polymeric diffusion-limiting material; and
   a second dispersed phase comprised of S-ethyl cyclohexylethylthiocarbamate
   with no diffusion-limiting barrier at the surface thereof;
   and a suspension system to prevent the dispersed phases from agglomerating within themselves and with each other in which said suspension system is comprised of a combination of a xanthan gum, an attapulgite clay, aluminium sulfate, and sodium tripolyphosphate.

2. A formulation in accordance with Claim 1 in which the first and second dispersed phases are each further comprised of N,N-diallyl-1,1-dichloroacetamide.

3. A formulation in accordance with Claim 2 in which the second dispersed phase is comprised of droplets of S-ethyl cyclohexylethylthiocarbamate and N,N-diallyl-1,1-dichloroacetamide.

4. A formulation in accordance with Claim 1 in which the first dispersed phase comprises from 5% to 50%, said second dispersed phase comprises from 5% to 50%, said xanthan gum comprises from 0.01% to 0.1% thereof, said attapulgite clay comprises from 0.1% to 1.0% thereof, said aluminium sulfate comprises from 0.01% to 0.1% thereof, and said sodium tripolyphosphate comprises from 0.003% to 0.1% thereof, all by weight.

5. A water-based herbicidal formulation comprising a continuous aqueous liquid having suspended therein:
a first dispersed phase comprised of S-ethyl di-n-propylthiocarbamate in liquid form encapsulated in a porous shell of inert polymeric diffusion-limiting material; a second dispersed phase comprised of S-ethyl di-n-propylthiocarbamate with no diffusion-limiting barrier at the surface thereof; and
a suspension system to prevent the dispersed phases from agglomerating within themselves and with each other wherein the suspension system is comprised of a combination of a xanthan gum, an attapulgite clay, and sodium tripolyphosphate.

6. A formulation in accordance with Claim 5 in which said first and second dispersed phases are each further comprised of N,N-diallyl-1,1-dichloroacetamide.

7. A formulation in accordance with Claim 6 in which said second dispersed phase is comprised of droplets of S-ethyl-di-n-propylthiocarbamate and N,N-diallyl-1,1-dichloroacetamide.

8. A formulation in accordance with Claim 5 in which the first dispersed phase comprises from 5% to 50% thereof, said second dispersed phase comprises from 5% to 50% thereof, said xanthan gum comprises from 0.01% to 0.1% thereof, said attapulgite clay comprises from 0.1% to 1.0% thereof, and said sodium tripolyphosphate comprises from 0.01% to 0.1% thereof, all by weight.

9. A water-based herbicidal formulation comprising a continuous aqueous liquid having suspended therein:
a first dispersed phase comprised of S-ethyl diisobutylthiocarbamate and N,N-diallyl-1,1-dichloroacetamide in liquid form encapsulated in a porous shell of inert polymeric diffusion-limiting material; and
a second dispersed phase comprised of solid particles of 2-chloro-4-ethylamino-6-isopropylamino-S-triazine with no diffusion-limiting barrier at the surface thereof; and
a suspension system to prevent the dispersed phases from agglomerating within themselves and with each other wherein said suspension system is comprised of a combination of a xanthan gum, aluminium sulfate, and sodium tripolyphosphate.

10. A formulation in accordance with Claim 9 in which said first dispersed phase comprises from 5% to 50% thereof, said second dispersed phase comprises from 5% to 50% thereof, said xanthan gum comprises from 0.01% to 0.1% thereof, said aluminium sulfate comprises from 0.01% to 0.1% thereof, and said sodium tripolyphosphate comprises from 0.01% to 0.1% thereof, all by weight.

11. A water-based herbicidal formulation comprising a continuous aqueous liquid having suspended therein:
a first dispersed phase comprised of $\alpha,\alpha,\alpha$-trifluoro-2,6-dinitro-N,N-dipropyl-p-toluidine in liquid form encapsulated in a porous shell of inert polymeric diffusion-limiting material; and
a second dispersed phase comprised of solid particles of 2-($\alpha$-naphthoxy)-N,N-diethylpropionamide with no diffusion-limiting barrier at the surface thereof; and
a suspension system to prevent the dispersed phases from agglomerating within themselves and with each other wherein said suspension system is comprised of a combination of a polyalkylene glycol ether, an ethoxylated alkylaryl ether, an ethoxylated polyarylphenol phosphate, a cresol formaldehyde, a xanthan gum and an attapulgite clay.

**Patentansprüche**

1. Wäßrige Herbicid-Formulierung, die eine kontinuierliche wäßrige Flüssigkeit umfaßt, in der suspendiert ist:
eine erste dispergierte Phase, die in einer porösen Hülle aus einem inerten, polymeren, die Diffusion beschränkenden Material verkapseltes S-Ethylcyclohexylethylthiocarbamat in flüssiger Form enthält;
und eine zweite dispergierte Phase, die S-Ethylcyclohexylethylthiocarbamat ohne eine die Diffusion beschränkende Barriere an ihrer Oberfläche enthält; und
ein Suspensionssystem, um zu verhindern, daß die dispergierten Phasen in sich und miteinander agglomerieren, wobei das Suspensionssystem eine Kombination eines Xanthangummis, eines Attapulgit-Tons, von Aluminiumsulfat und Natriumtripolyphosphat enthält.

2.  Formulierung nach Anspruch 1, wobei die erste und zweite dispergierte Phase außerdem jeweils N,N-Diallyl-1,1-dichloracetamid umfassen.

3.  Formulierung nach Anspruch 2, wobei die zweite dispergierte Phase Tröpfchen von S-Ethylcyclohexylethylthiocarbamat und N,N-Diallyl-1,1-dichloracetamid enthält.

4.  Formulierung nach Anspruch 1, wobei die erste dispergierte Phase von 5 % bis 50 % ausmacht, die zweite dispergierte Phase von 5 % bis 50 % ausmacht, das Xanthangummi von 0,01 % bis 0,1 % davon ausmacht, der Attapulgit-Ton von 0,1 bis 1,0 % davon ausmacht, das Aluminiumsulfat von 0,01 % bis 0,1 % davon ausmacht und das Natriumtripolyphosphat von 0,003 % bis 0,1 % davon ausmacht, jeweils nach Gewicht.

5.  Wäßrige Herbicid-Formulierung, die eine kontinuierliche wäßrige Flüssigkeit umfaßt, in der suspendiert ist:
    eine erste dispergierte Phase, die in einer porösen Hülle aus einem inerten, polymeren, die Diffusion beschränkenden Material verkapseltes S-Ethyl-di-n-propylthiocarbamat in flüssiger Form umfaßt; eine zweite dispergierte Phase, die S-Ethyl-di-n-propylthiocarbamat ohne eine die Diffusion beschränkende Barriere an ihrer Oberfläche umfaßt;
    und ein Suspensionssystem, um zu verhindern, daß die dispergierten Phasen in sich und miteinander agglomerieren, wobei das Suspensionssystem eine Kombination eines Xanthangummis, eines Attapulgit-Tons und von Natriumtripolyphosphat enthält.

6.  Formulierung nach Anspruch 5, wobei die erste und die zweite dispergierte Phase jeweils außerdem N,N-Diallyl-1,1-dichloracetamid enthält.

7.  Formulierung nach Anspruch 6, wobei die zweite dispergierte Phase Tröpfchen von S-Ethyl-di-n-propylthiocarbamat und N,N-Diallyl-1,1-dichloracetamid enthält.

8.  Formulierung nach Anspruch 5, wobei die erste dispergierte Phase von 5 % bis 50 % davon ausmacht, die zweite dispergierte Phase von 5 % bis 50 % davon ausmacht, das Xanthangummi von 0,01 % bis 0,1 % davon ausmacht, der Attapulgit-Ton von 0,1 bis 1,0 % davon ausmacht und das Natriumtripolyphosphat von 0,01 % bis 0,1 % davon ausmacht, jeweils nach Gewicht.

9.  Wäßrige Herbicid-Formulierung, die eine kontinuierliche wäßrige Flüssigkeit umfaßt, in der suspendiert ist:
    eine erste dispergierte Phase, die in einer porösen Hülle aus einem inerten, polymeren, die Diffusion beschränkenden Material verkapseltes S-Ethyldiisobutylthiocarbamat und N,N-Diallyl-1,1-dichloracetamid in flüssiger Form enthält; und
    eine zweite dispergierte Phase, die feste Teilchen von 2-Chlor-4-ethylamino-6-isopropylamino-S-triazin ohne eine die Diffusion beschränkende Barriere an ihrer Oberfläche enthält; und
    ein Suspensionssystem, um zu verhindern, daß die dispergierten Phasen in sich und miteinander agglomerieren, wobei das Suspensionssystem eine Kombination eines Xanthangummis, von Aluminiumsulfat und Natriumtripolyphosphat enthält.

10. Formulierung nach Anspruch 9, wobei die erste dispergierte Phase von 5 % bis 50 % davon ausmacht, die zweite dispergierte Phase von 5 % bis 50 % davon ausmacht, das Xanthangummi von 0,01 bis 0,1 % davon ausmacht, das Aluminiumsulfat von 0,01 % bis 0,1 % davon ausmacht und das Natriumtripolyphosphat von 0,01 % bis 0,1 % davon ausmacht, jeweils nach Gewicht.

11. Wäßrige Herbicid-Formulierung, die eine kontinuierliche wäßrige Flüssigkeit enthält, in der suspendiert ist:
    eine erste dispergierte Phase, die in einer porösen Hülle aus einem inerten, polymeren, die Diffusion beschränkenden Material verkapseltes $\alpha,\alpha,\alpha$-Trifluor-2,6-dinitro-N,N-dipropyl-p-toluidin in flüssiger Form enthält; und
    eine zweite dispergierte Phase, die feste Teilchen aus 2-($\alpha$-Naphthoxy)-N,N-diethylpropionamid ohne eine die Diffusion beschränkende Barriere an ihrer Oberfläche enthält; und
    ein Suspensionssystem, um zu verhindern, daß die dispergierten Phasen in sich und miteinander agglomerieren, wobei das Suspensionssystem eine Kombination eines Polyalkylenglycolethers, eines ethoxylierten Alkylarylethers, eines ethoxylierten Polyarylphenolphosphats, eines Cresolformaldehyds, eines Xanthangummis und eines Attapulgit-Tons enthält.

## Revendications

1.  Formulation herbicide à base aqueuse, comprenant un liquide aqueux continu renfermant, en suspension :
    une première phase dispersée constituée de cyclohexyléthylthiocarbamate de S-éthyle

sous forme liquide encapsulée dans une enveloppe poreuse de matière polymérique inerte limitant la diffusion ; et

une seconde phase dispersée constituée de cyclohexyléthylthiocarbamate de S-éthyle sans barrière limitant la diffusion à sa surface ;

et un système en suspension empêchant les phases dispersées de s'agglomérer au sein d'elles-mêmes et l'une avec l'autre, ce système en suspension étant constitué de l'association d'une gomme xanthane, d'une argile du type attapulgite, de sulfate d'aluminium et de tripolyphosphate de sodium.

2. Formulation suivant la revendication 1, dans laquelle les première et seconde phases dispersées sont en outre constituées chacune de N,N-diallyl-1,1-dichloracétamide.

3. Formulation suivant la revendication 2, dans laquelle la seconde phase dispersée est constituée de gouttelettes de cyclohexyléthylthiocarbamate de S-éthyle et de N,N-diallyl-1,1-dichloracétamide.

4. Formulation suivant la revendication 1, dont la première phase dispersée constitue 5 à 50 %, la seconde phase dispersée constitue 5 à 50 %, la gomme xanthane constitue 0,01 à 0,1 %, l'argile du type attapulgite constitue 0,1 à 1,0 %, le sulfate d'aluminium constitue 0,01 à 0,1 % et le tripolyphosphate de sodium constitue 0,003 à 0,1 %, le tout en poids.

5. Formulation herbicide à base aqueuse, comprenant un liquide aqueux continu contenant en suspension :

une première phase dispersée constituée de di-n-propylthiocarbamate de S-éthyle sous la forme liquide encapsulée dans une enveloppe poreuse de matière polymérique inerte limitant la diffusion ;

une seconde phase dispersée constituée de di-n-propylthiocarbamate de S-éthyle sans barrière limitant la diffusion à sa surface ; et

un système en suspension empêchant les phases dispersées de s'agglomérer au sein d'elles-mêmes et l'une avec l'autre, ce système en suspension étant constitué d'une association de gomme xanthane, d'argile du type attapulgite et de tripolyphosphate de sodium.

6. Formulation suivant la revendication 5, dans laquelle les première et seconde phases dispersées sont en outre constituées de N,N-diallyl-1,1-dichloracétamide.

7. Formulation suivant la revendication 6, dans laquelle la seconde phase dispersée est constituée de gouttelettes de di-n-propylthiocarbamate de S-éthyle et de N,N-diallyl-1,1-dichloracétamide.

8. Formulation suivant la revendication 5, dont la première phase dispersée constitue 5 à 50 %, la seconde phase dispersée constitue 5 à 50 %, la gomme xanthane constitue 0,01 à 0,1 %, l'argile du type attapulgite constitue 0,1 à 1,0 % et le tripolyphosphate de sodium constitue 0,01 à 0,1 %, le tout en poids.

9. Formulation herbicide à base aqueuse comprenant un liquide aqueux continu contenant en suspension :

une première phase dispersée constituée de diisobutylthiocarbamate de S-éthyle et de N,N-diallyl-1,1-dichloracétamide sous la forme liquide encapsulée dans une enveloppe poreuse de matière polymérique inerte limitant la diffusion ; et

une seconde phase dispersée constituée de particules solides de 2-chloro-4-éthylamino-6-isopropylamino-S-triazine sans barrière limitant la diffusion à sa surface ; et

un système en suspension servant à empêcher les phases dispersées de s'agglomérer au sein d'elles-mêmes et l'une avec l'autre, le système en suspension étant constitué d'une association de gomme xanthane, de sulfate d'aluminium et de tripolyphosphate de sodium.

10. Formulation suivant la revendication 9, dont la première phase dispersée constitue 5 à 50 %, la seconde phase dispersée constitue 5 à 50 %, la gomme xanthane constitue 0,01 à 0,1 %, le sulfate d'aluminium constitue 0,01 à 0,1 % et le tripolyphosphate de sodium constitue 0,01 à 0,1 %, le tout en poids.

11. Formulation herbicide à base aqueuse comprenant un liquide aqueux continu contenant en suspension :

une première phase dispersée constituée d'$\alpha,\alpha,\alpha$-trifluoro-2,6-dinitro-N,N-dipropyl-p-toluidine sous la forme liquide encapsulée dans une enveloppe poreuse de matière polymérique inerte limitant la diffusion ; et

une seconde phase dispersée constituée de particules solides de 2-($\alpha$-naphtoxy)-N,N-diéthylpropionamide sans barrière limitant la diffusion à sa surface ; et un système en suspension pour empêcher les phases dispersées de s'agglomérer au sein d'elles-mêmes et l'une avec l'autre, ce système en suspension étant constitué d'une association d'un éther de polyalkylèneglycol, d'un éther alkylarylique éthoxylé, d'un phosphate de polyarylphénol éthoxylé, d'un crésol-formaldéhyde, d'une gomme xanthane et d'une argile du type attapulgite.